Europäisches Patentamt

European Patent Office

Office européen des brevets

(11) Publication number: **0 485 607 A1**

# EUROPEAN PATENT APPLICATION
## published in accordance with Art. 158(3) EPC

(21) Application number: 90911704.6

(22) Date of filing: 03.08.90

(86) International application number:
**PCT/JP90/01000**

(87) International publication number:
**WO 91/01836 (21.02.91 91/05)**

(51) Int. Cl.5: **B23B 31/117**

(30) Priority: **04.08.89 JP 91473/89 U**
**21.09.89 JP 109613/89 U**

(43) Date of publication of application:
**20.05.92 Bulletin 92/21**

(84) Designated Contracting States:
**CH ES LI**

(71) Applicant: **KABUSHIKI KAISHA KOMATSU SEISAKUSHO**
**3-6, Akasaka 2-chome**
**Minato-ku Tokyo 107(JP)**

(72) Inventor: **DAIMARU, K. Awazu Factory of Kabushiki Kaisha**
**Komatsu Seisakus ho; 23-banchi, Tsu, Futsu-machi**
**23-banchi, Tsu, Futsu-machi, Komatsu-shi(JP)**
Inventor: **MORITA, K. Awazu Factory of Kabushiki Kaisha**
**Komatsu Seisakus ho; 23-banchi, Tsu, Futsu-machi**
**23-banchi, Tsu, Futsu-machi, Komatsu-shi(JP)**

(74) Representative: **Patentanwälte TER MEER - MÜLLER - STEINMEISTER & PARTNER**
**Mauerkircherstrasse 45**
**W-8000 München 80(DE)**

(54) CUTTER OF COMPOUND MACHINE TOOL AND ANTI-DUST DEVICE THEREFOR.

(57) A cutter stably supported on the main spindle of a machine tool and free of chattering in spite of large resistance to cutting generated during working as well as endowed with an increased dust-proof capability. The cutter is provided with a flange (1c) disposed on the diametrally larger part (1a) of the cutter proper (1) having the diametrally larger part (1a) and smaller part (1b) positioned that order along the direction from the cutter tip to the base end at which the cutter is fixed to the main spindle (2) of the machine tool, and provided with a diametrally larger tapered part (1d) to abut on a tapered ring (6) of the main spindle, and is further provided with a member (9) diplaceably disposed on the diametrally smaller part through a resilient member (8) and having a diametrally smaller tapered peripheral surface (9a).

F I G . 2

## TECHNICAL FIELD OF THE INVENTION

The present invention relates to a rotary tool, cutting or other tools for use in a composite machine tool, and a dust-proof means for preventing attachment of debris to the taper or load bearing portion of the tool.

## BACKGROUND ART OF THE INVENTION

Conventionally, a composite machine tool includes a spindle to mount a rotary tool and a cutting tool. The spindle is rotated when the rotary tool is used. While the spindle is fixed, a workpiece is rotated when the cutting tool is used to perform a turning operation.

As exemplified in Japanese patent publication No. Sho 58-2514, a spindle has a large diamater taper portion at its one end to receive loads. When a cutting tool is mounted to the spindle of a machine tool, the large diameter taper portion is bought into contact with a taper portion of the cutting tool to support cutting resistance on the taper portion and the end surface of the spindle which may occur during operation.

In such a case, however, it is necessary to insert a shim between the end surface of the spindle and the cuting tool and effect axial adjustment so as to allow close contact of the large diameter taper portion with the end surface of the spindle. This adjustment requires substantial time and is inefficient, but must be effected whenever tools are exchanged or added. This impairs exchangeability of tools.

A tool which is mounted to the spindle of a machine tool to perform a drilling or turing operation usually has a tapered mounting portion. This tapered mounting portion of the tool is inserted into a tapered mounting hole of the spindle to register the center of the spindle with that of the tool.

Recently, many machine tools include antomatic tool exchange units to automatically exchange tools. When a tool is mounted to a spindle with debris attached to the mounting portion of the tool or a taper ring, the center of the spindle can not be registered with the center of the tool. This deteriorates machining accuracay.

To overcome these problems, when the rotary tool is mounted to the spindle, air is introduced adjacent to the taper ring of the cutting tool to prevent attachement of debris to the tapered surface.

However, since the mounting portion of the rotary tool is smaller in diameter than that of the cutting tool, a large space is formed between the mounting portion of the rotary tool and the taper ring. As a result, air is unable to fully prevent attachment of debris.

## SUMMARY OF THE INVENTION

In view of the foregoing, it is an object of the present invention to provide a tool for use is a composite machine tool wherein cutting resistance is received on a large diameter taper portion and a small diameter taper portion of a spindle of the machine tool.

Another object of the present invention is to provide a dust-proof cover for use in a tool, which prevents attachment of debris or the like to a taper portion on which cutting load of the tool is exerted.

In order to achieve these objects, according to a first aspect of the present invention, there is provided a tool for use is a compoiste machine tool which comprises a tool body having a large diameter portion formed at a cutting edge, and a small diameter portion formed at its proximal end and mounted to a spindle of the machine tool, wherein a flange extends from the large diameter portion and has a large diameter taper portion adapted to contact with a taper ring attached to the front end of the spindle when the tool is mounted to the spindle, and a member is movably mounted on the small diameter portion of the tool body and has a small diameter conical outer peripheral surface pressed, by an elastic member, against a conical inner peripheral surface which is formed in a recess of the spindle to receive the tool.

Also, in order to achieve the foregoing objects, according to a second aspect of the present invention, there is provided a tool for use in a composite machine tool as set forth above which further includes means for directing a jet of air outwardly from between the inner peripheral surface of the taper ring of the spindle and the outer peripheral surface of the large dismeter taper portion of the flange of the tool.

These aspects of the present invention provide the following advantages.

Cutting load exerted on the tool during operation is received on the spindle through the taper surface of the large diameter taper portion of the flange and the taper surface of the small diameter taper member. This prevents any vibrations which may occur due to large cutting resistance and thus, ensures high machining accuracay.

The small diameter taper member is pressed against the conical inner peripheral surface of the spindle under the action of the elastic member. This eliminates the need for axial adjustment which is required in the prior art whenever tools are exchanged and thus, provides a better level of productivity.

Also, debris which may be produced during a cutting operation is in no way attached to the taper surface of the taper ring.

Further, a jet of air is directed through the space between the flange of the tool and the taper ring of the spindle to substantially improve blowing effeciency. This arrangement is economical since attachment of dust may be prevented with a lesser amount of air.

These and other objects, features and advantages of the present invention will become apparent to those skilled in the art by reference to the following description of a preferred embodiment as the principles of the present invention when taken in conjunction with the accompanying drawings.

BRIEF DESCRIPTION OF THE DRAWINGS

Fig. 1 is a side view of a first embodiment of the present invention with its principal part shown in section;

Fig. 2 is a sectional view showing the principal part of the first embodiment of the present invention mounted to the spindle of a machine tool;

Fig. 3 is a side view of a modified form of the first embodiment with its principal part shown in section,

Fig. 4 is a side view of another modified form of the first embodiment, with its principal part shown in section, wherein a passage is formed to flow cooling fluid therethrough; and

Fig. 5 is a schematic sectional view of a second embodiment of the present invention mounted to the spindle of a machine tool.

DETAILED DESCRIPTION OF PREFERRED EMBODIMENTS

Several preferred embodiments of the present invention will now be described with reference to the accompanying drawings.

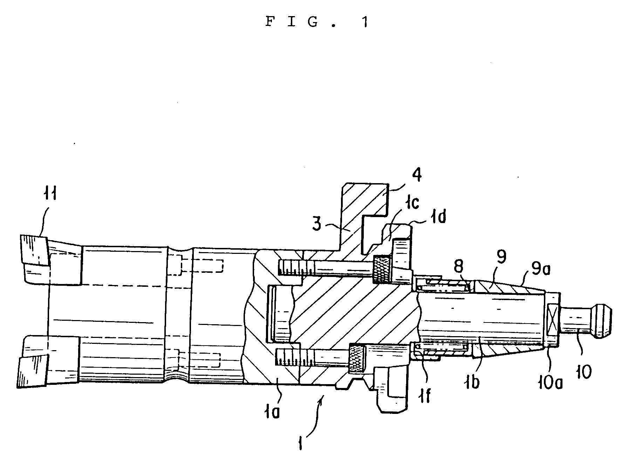

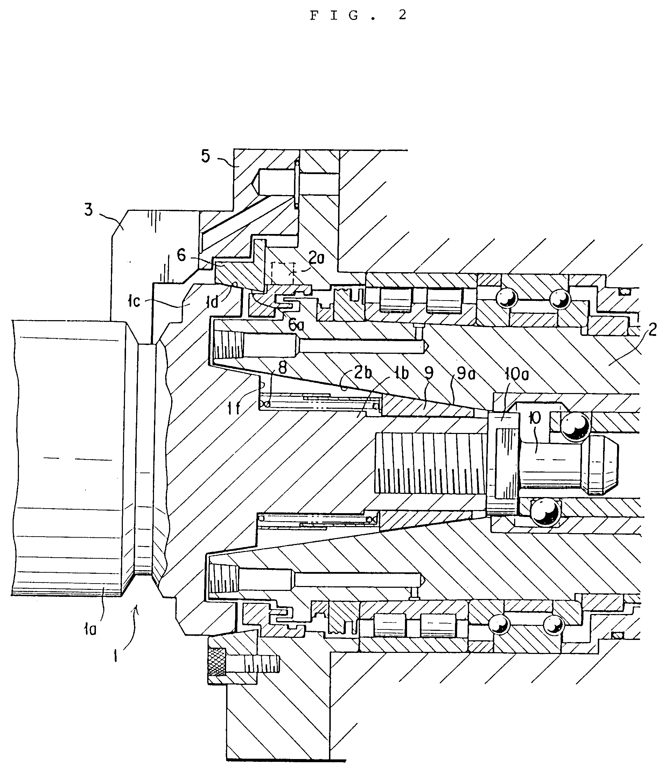

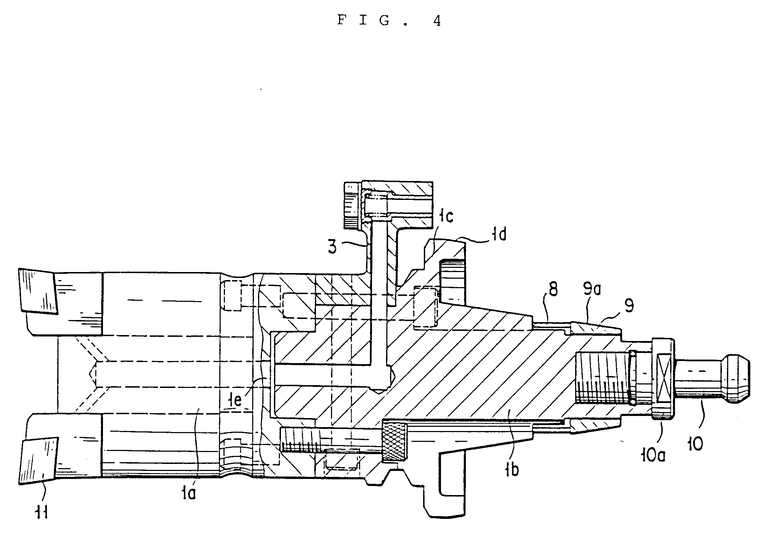

A first embodiment of the present invention and its modification will first be described with reference to Figs. 1 to 4.

In the drawing, 1 is a cutting tool body detachably mounted to the front end of a spindle 2 of a composite machine tool and including a large diameter portion 1a, and a small diameter portion 1b. A locking arm 3 extends from the outer periphery of the large diameter portion 1a and has a front end received in an arm groove 5 which is formed in the spindle 2. This prevents rotation of the cutting tool body 1.

A flange 1c is integral with the outer periphery of the large diameter portion 1a and has a large diameter taper portion. The large diameter taper portion has a conical outer peripheral surface 1d. A taper ring 6 is mounted in the front end of the spindle 2 and has a conical inner peripheral surface 6a which is brought into contact with the conical outer peripheral surface 1d when the cutting tool body 1 is mounted to the spindle 2. An air passage 2a is formed adjacent to the taper ring 6. A jet of air is directed through the air passage 2a to blow off debris which may be attached to the conical surfaces 1d, 6a. This ensures close contact of the conical surfaces 1d, 6a.

An elastic member 8 such as a coil spring is located in the small diameter portion 1b of the cutting tool body 1.

The elastic member 8 is disposed between a taper member 9 fit on the front end of the small diameter portion 1b and a step portion 1f formed between the large diameter portion 1a and the small diameter portion 1b so as to urge the taper member 9 toward the front end of the small diameter portion 1b. A pull stud 10 is threaded to the front end of the small diameter portion 1b. The pull stud 10 has a large diameter portion 10a to prevent release of the small diameter taper member 9.

The small diameter taper member 9 has an outer peripheral surface tapered to provide a conical surface 9a. The spindle 2 has a conical inner peripheral surface 2b. When the cutting tool 1 is mounted to the spindle 2, the conical outer peripheral surface 9a of the small diameter taper member 9 is pressed against the conical inner peripheral surface 2b of the spindle 2 under the influence of the elastic member 8.

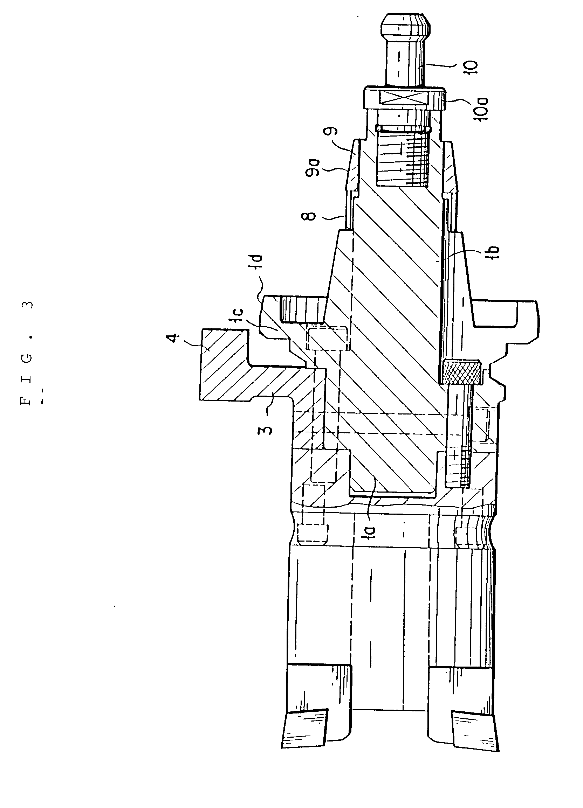

As shown in Fig. 3, an urethane rubber ring or other elastic elements may alternatively be used as the elastic member 8 in lieu of the coil spring.

Also, as an alternative, the cutting tool 1 may have a passage 1e. Cooling fluid is fed from the spindle 2 and flows through the passage 1e toward a tip 11 to cool the cutting region of the cutting tool 1 during a cutting operation.

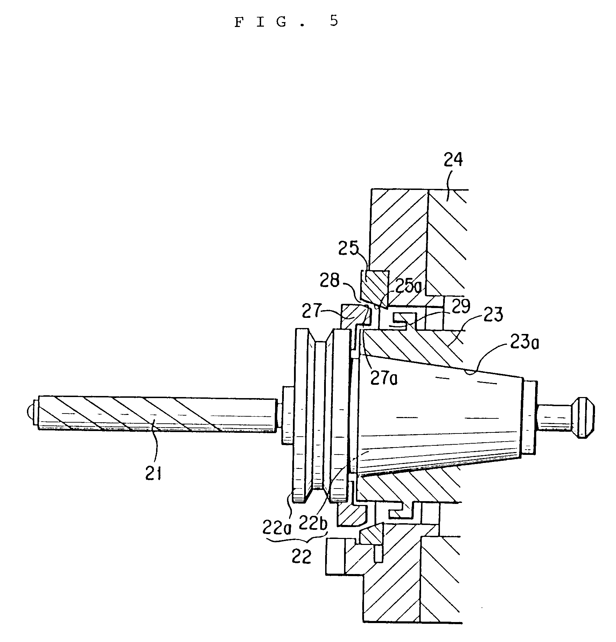

Fig. 5 illustrates a second embodiment of the present invention which more effectively prevents attachment of dust.

In the drawing, 21 is a rotary tool mounted to a holder 22. The holder 22 includes a gripping portion 22a gripped by an arm of an automatic tool exchange unit, and a tapered mounting portion 22b.
22b.

23 is a spindle rotatably supported by a spindle head 24 of a machine tool. A tapered mounting hole 23a is formed in the front end of the spindle 23 to receive the mounting portion 22b of the holder 22. A taper ring 25 is attached to the front surface of the spindle head 24 and loosely fit around the front end of the spindle 23.

The taper ring 25 has a conical inner peripheral surface 25a. When a cutting tool is mounted to the spindle 23, part of the cutting tool is brought into contact with the conical inner peripheral surface 25a of the taper ring 25 so as to allow the taper ring 25 to support part of cutting load which may be applied to the cutting tool during a turning operation. The holder 22 has a large diameter flange 27. A space 28 is formed between the flange 27 and the conical inner peripheral surface 25a of the taper ring 25 when the holder 22 is mounted to the spindle 23.

The flange 27 is press fit between the gripping portion 22a and the mounting portion 22b of the holder 22 and attached to the holder 22 by an adhesive or other means. The flange 27 has a conical outer peripheral surface 17a which is in confronting relation to the conical inner peripheral surface 25a of the taper ring 25 when the mounting portion 22b is inserted into the mounting hole 23a of the spindle 23.

An air passage 29 extends around the spindle 23. When the rotary tool 21 is in use, a jet of air is directed outwardly from the air passage 29 through the space 28 to prevent attachment of debris to the conical surface 25a of the taper ring 25.

## Claims

1. A tool for use in a composite machine tool including a tool body having a large diameter portion formed at a cutting edge, and a small diameter portion formed at its proximal end and mounted to a spindle of the machine tool, said tool comprising a flange extending from the large diameter portion and having a large diameter taper portion adapted to contact with a taper ring attached to the front end of the spindle when the tool is mounted to the spindle, and a member movably mounted on said small diameter portion of the tool body and having a small diameter conical outer peripheral surface pressed, by an elastic member, against a conical inner peripheral surface which is formed in a recess of the spindle to receive the tool.

2. A tool for use in a composite machine tool according to claim 1, wherein said elastic member is a compressive coil spring.

3. A tool for use in a composite machine tool according to claim 1, wherein said elastic member is an urethane rubber ring.

4. A tool for use in a composite machine tool according to claim 1, wherein a passage is formed to allow a cooling fluid supplied from the spindle to the tool body to flow toward the cutting edge.

5. A tool for use in a composite machine tool according to claim 1, further including means for directing a jet of air outwardly from between the inner peripheral surface of the taper ring of the spindle and the outer peripheral surface of the large diameter taper portion of the flange of the tool.

F I G . 1

F I G . 2

EP 0 485 607 A1

FIG. 3

FIG. 4

F I G . 5

# INTERNATIONAL SEARCH REPORT

International Application No PCT/JP90/01000

| I. CLASSIFICATION OF SUBJECT MATTER (if several classification symbols apply, indicate all) 6 |
|---|

According to International Patent Classification (IPC) or to both National Classification and IPC

Int. Cl$^5$     B23B31/117

| II. FIELDS SEARCHED |
|---|

| Minimum Documentation Searched 7 | |
|---|---|
| Classification System | Classification Symbols |
| IPC | B23B31/117, B23Q3/12 _ |

Documentation Searched other than Minimum Documentation
to the Extent that such Documents are Included in the Fields Searched 8

Jitsuyo Shinan Koho       1970 - 1990
Kokai Jitsuyo Shinan Koho     1971 - 1990

| III. DOCUMENTS CONSIDERED TO BE RELEVANT 9 | | |
|---|---|---|
| Category * | Citation of Document, 11 with indication, where appropriate, of the relevant passages 12 | Relevant to Claim No. 13 |
| Y | JP, U, 1-71006 (Toyoda Machine Works, Ltd., Toyota Motor Corp.), 11 May 1989 (11. 05. 89), (Family: none) | 1 - 5 |
| Y | JP, U, 56-2304 (Mitsubishi Heavy Industries, Ltd.), 10 January 1981 (10. 01. 81), Fig. 3 (Family: none) | 1 - 5 |
| Y | JP, U, 61-141034 (Toyota Motor Corp.), 1 September 1986 (01. 09. 86), (Family: none) | 1 - 5 |
| Y | JP, B1, 49-36191 (Okuma Machinery Works, Ltd.), 28 September 1974 (28. 09. 74), Lines 3 to 10, column 3, Fig. 6 (Family: none) | 5 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| IV. CERTIFICATION | |
|---|---|
| Date of the Actual Completion of the International Search | Date of Mailing of this International Search Report |
| October 18, 1990 (18. 10. 90) | November 5, 1990 (05. 11. 90) |
| International Searching Authority | Signature of Authorized Officer |
| Japanese Patent Office | |

Form PCT/ISA/210 (second sheet) (January 1985)